# DEMANDE DE BREVET EUROPEEN

(11) **EP 0 816 183 A1**
(43) Date de publication de la demande: **07.01.1998**
(21) Numéro de dépôt: 97401240.3
(22) Date de dépôt: 03.06.1997
(51) Int. Cl.: B60R 21/20, B60R 16/02

(54) **Volant de direction, notamment pour véhicule automobile**

(30) Priorité: 04.06.1996 FR 9606887
(71) Demandeur: ECIA - EQUIPEMENTS ET COMPOSANTS POUR L'INDUSTRIE AUTOMOBILE, F-25400 Audincourt (FR)
(72) Inventeur: Houitte, Jean-Claude, 90160 Perouse (FR); Morel, Jean-Charles, 25200 Montbeliard (FR)
(74) Mandataire: Habasque, Etienne Joel Jean-François

(57) **Abrégé**

Ce volant comportant un coussin central (2) muni de moyens d'activation (19) d'au moins un organe fonctionnel du véhicule et relié par l'intermédiaire d'au moins un bras de liaison à une jante annulaire et comprenant une armature de support (7) sur un côté de laquelle est prévu un module à sac gonflable (8) comportant un couvercle (9) et sur l'autre côté de laquelle est prévue une coque d'habillage (10), est caractérisé en ce que le couvercle (9) et la coque (10) se présentent sous la forme de deux demi-coquilles complémentaires présentant des zones d'accrochage (11) pour former un sous-ensemble monté déplaçable, par appui de l'utilisateur sur le couvercle, à l'encontre de l'action de moyens élastiques (18), entre une première position et une seconde position de commande des moyens d'activation (19).

## Description

La présente invention concerne un volant de direction notamment de véhicule automobile.

Plus particulièrement, la présente invention concerne un volant de direction qui comporte un coussin central relié par l'intermédiaire d'au moins un bras de liaison à une jante annulaire et comprenant une armature de support sur un côté de laquelle est prévu un module à sac gonflable comportant un couvercle et sur l'autre côté de laquelle est prévue une coque d'habillage.

De plus, le coussin central est muni de moyens d'activation d'au moins un organe fonctionnel du véhicule tel que l'avertisseur sonore de celui-ci.

On conçoit que ces moyens d'activation sont commandés lorsque l'utilisateur appuie sur le couvercle du module à sac gonflable implanté dans le coussin central du volant.

On connaît déjà dans l'état de la technique, un certain nombre de volants de ce type mais dont les structures sont relativement complexes.

En effet, l'intégration d'un module à sac gonflable et de moyens d'activation d'un organe fonctionnel du véhicule, dans le coussin central d'un tel volant, se traduit par des structures de volant très complexes et donc très coûteuses à réaliser.

Le but de l'invention est donc de résoudre ces problèmes.

A cet effet, l'invention a pour objet un volant de direction notamment de véhicule automobile, du type comportant un coussin central muni de moyens d'activation d'au moins un organe fonctionnel du véhicule et relié par l'intermédiaire d'au moins un bras de liaison à une jante annulaire et comprenant une armature de support sur un côté de laquelle est prévu un module à sac gonflable comportant un couvercle et sur l'autre côté de laquelle est prévue une coque d'habillage, caractérisé en ce que le couvercle du module à sac gonflable et la coque d'habillage se présentent sous la forme de deux demi-coquilles complémentaires présentant des zones d'accrochage de l'une sur l'autre pour former un sous-ensemble monté déplaçable, par appui de l'utilisateur sur le couvercle, à l'encontre de l'action de moyens élastiques, entre une première position et une seconde position de commande des moyens d'activation de l'organe fonctionnel du véhicule.

L'invention sera mieux comprise à l'aide de la description qui va suivre donnée uniquement à titre d'exemple et faite en se référant aux dessins annexés, sur lesquels :

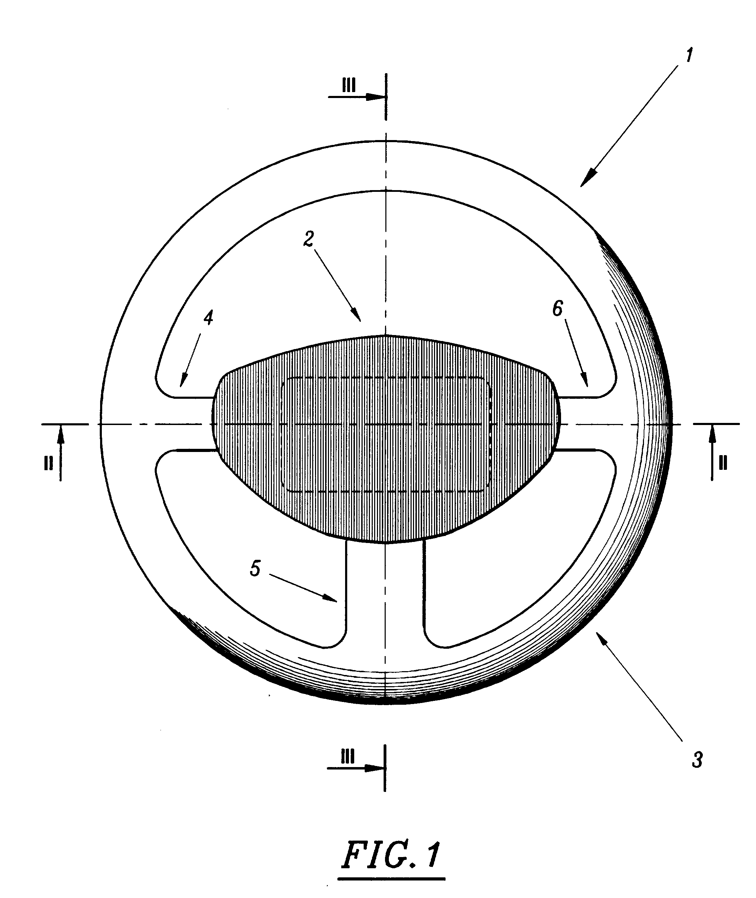

- la figure 1 représente une vue de face schématique illustrant la structure générale d'un volant de direction selon l'invention ;
- la figure 2 représente une vue schématique partielle prise selon la ligne II-II de la figure 1 ; et
- la figure 3 représente une vue schématique partielle prise suivant la ligne III-III de la figure 1.

On reconnaît sur ces figures un volant de direction, notamment de véhicule automobile, désigné par la référence générale 1.

Ce volant comporte de manière classique un coussin central désigné par la référence générale 2, relié par l'intermédiaire d'au moins un bras de liaison à une jante annulaire désignée par la référence générale 3. Dans l'exemple de réalisation représenté sur ces figures, ce volant comporte trois bras de liaison du coussin central à la jante, désignés par les références 4, 5 et 6 par exemple.

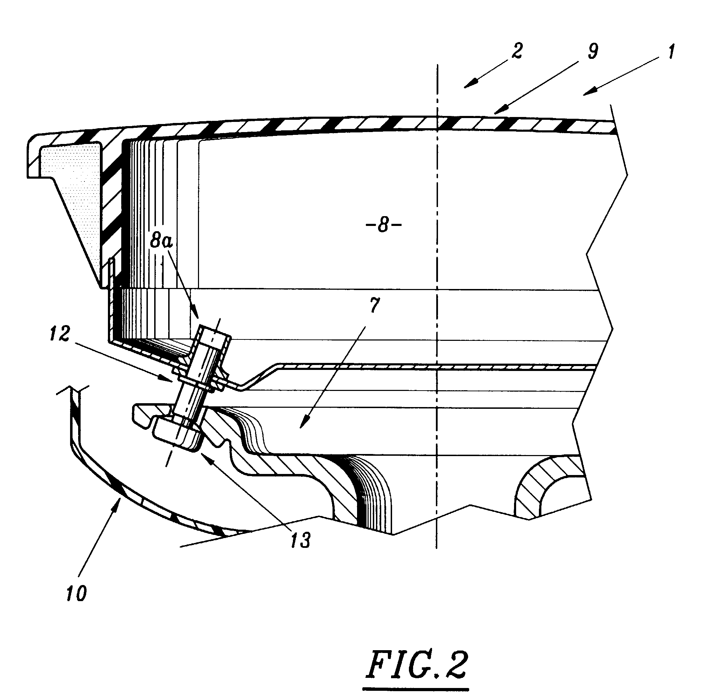

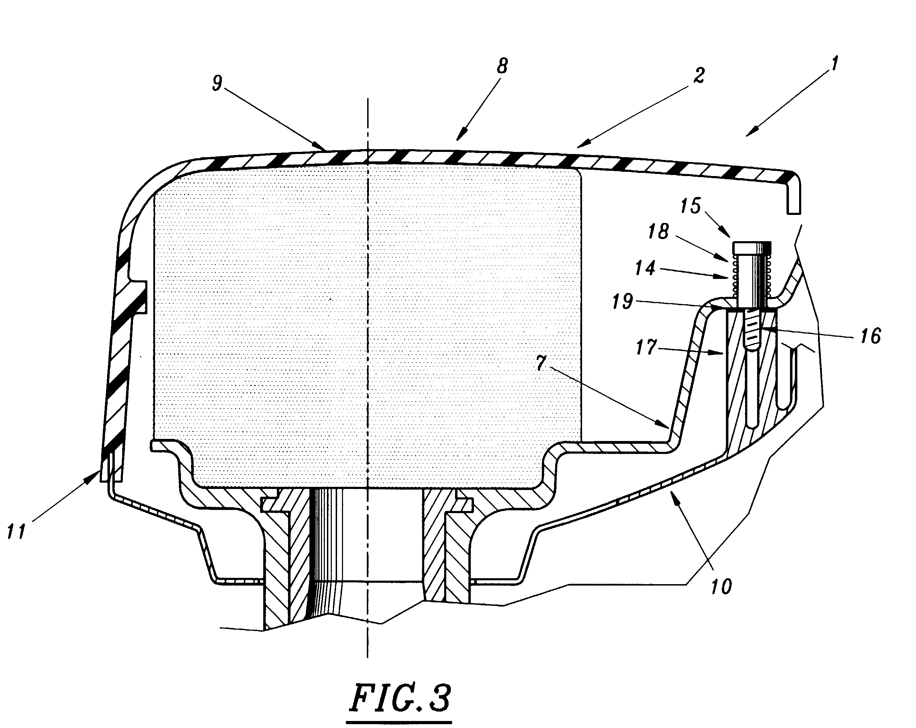

De façon classique également un tel volant comporte une armature de support désignée par exemple par la référence générale 7 sur les figures 2 et 3, sur un côté de laquelle est prévu un module à sac gonflable désigné par exemple par la référence générale 8 sur ces figures, ce module à sac gonflable comportant un couvercle 9. De l'autre côté de cette armature, est prévue une coque d'habillage désignée par la référence générale 10.

Comme cela ressort plus clairement de la figure 3, le couvercle du module à sac gonflable, désigné par la référence générale 9, et la coque d'habillage, désignée par la référence générale 10, se présentent sous la forme de deux demi-coquilles complémentaires présentant des zones d'accrochage de l'une sur l'autre, dont l'une est désignée par la référence générale 11 par exemple sur cette figure 3, pour former un sous-ensemble monté déplaçable, par appui de l'utilisateur sur le couvercle du module à sac gonflable, à l'encontre de l'action de moyens élastiques, entre une première position et une seconde position de commande de moyens d'activation d'au moins un organe fonctionnel du véhicule, également disposés dans le coussin central du volant de direction comme cela sera décrit plus en détail par la suite.

Différents modes de réalisation des zones d'accrochage du couvercle du module à sac gonflable sur la coque d'habillage pour former le sous-ensemble mentionné précédemment, peuvent être envisagés et on notera que ces zones peuvent comporter des moyens d'accrochage se présentant sous la forme de parties en saillie et en creux complémentaires d'accrochage de ces pièces.

Bien entendu, différents types de moyens d'accrochage de ces pièces peuvent être envisagés.

On notera également comme on peut le voir sur la figure 2, que le module à sac gonflable 8 est fixé sur l'armature 7 par l'intermédiaire de moyens de fixation dont l'un est désigné par la référence générale 12 sur cette figure, autorisant une course de déplacement déterminée de ce module par rapport à cette armature.

C'est ainsi par exemple que chaque moyen de fixation 12 comprend une vis désignée par la référence générale 13, traversant un trou correspondant de l'armature 7 du volant et adaptée pour coopérer avec un écrou complémentaire 8a du module à sac gonflable 8, pour permettre la fixation de celui-ci sur cette armature.

Le couvercle 9 de ce module est quant à lui fixé sur le reste de celui-ci de toute manière appropriée.

La coque d'habillage 10 est également fixée sur l'armature du volant 7 par l'intermédiaire de moyens de fixation 14 (Fig.3) autorisant une course de déplacement déterminée de cette coque par rapport à cette armature.

Comme on peut le voir plus clairement sur la figure 3, ces moyens de fixation comprennent chacun par exemple une vis épaulée 15 adaptée pour traverser un trou de l'armature 7 du volant et pour s'engager dans un trou de fixation complémentaire 16 ménagé dans un plot de fixation 17 de cette coque sur l'armature.

Des moyens élastiques tel qu'un ressort hélicoïdal 18, sont interposés entre la tête de la vis 15 et l'armature de support 7 du volant. Cette vis et ces moyens élastiques permettent de solliciter le ou les plots correspondants 17 de la coque en direction de l'armature.

Les moyens d'activation de l'organe fonctionnel peuvent quant à eux comporter par exemple un organe sensible à la pression désigné par la référence générale 19 sur cette figure 3, et comportant par exemple une nappe sensible à la pression de type classique, interposée entre l'extrémité d'un plot ou de chaque plot de fixation 17 de la coque d'habillage 10 sur l'armature et cette armature du volant.

Cet organe sensible à la pression est raccordé de manière classique au reste du circuit d'activation par exemple électrique de l'organe fonctionnel du véhicule.

On conçoit alors que lorsque l'utilisateur n'appuie pas sur le couvercle du module à sac gonflable, les moyens élastiques 18 exercent sur la vis 15 un effort qui tend à plaquer l'extrémité du plot de fixation 17 contre l'armature en exerçant un effort de compression sur l'organe sensible à la pression 19. Dans cette situation, l'organe fonctionnel du véhicule n'est pas activé. La coque d'habillage 10 et le couvercle du module à sac gonflable 9 formant un sous-ensemble du fait de l'accrochage de celles-ci l'une sur l'autre, le couvercle de ce module est également sollicité vers la première position.

Si l'utilisateur appuie sur le couvercle du module à sac gonflable, le sous-ensemble comprenant ce couvercle et la coque d'habillage se déplace par rapport à l'armature du volant. Ce déplacement du sous-ensemble et donc de la coque d'habillage et de ses plots de fixation se traduit alors par un déplacement de la vis de fixation 15 de cette coque sur l'armature, à l'encontre de la sollicitation élastique des moyens 18 et le relachement de la contrainte appliquée sur ia nappe sensible 19 par la coque 10 et plus particulièrement par ses plots de fixation 17.

Ceci permet alors à cette nappe sensible 19 interposée entre l'extrémité du plot 17 et l'armature 7 du volant de détecter cette action de l'utilisateur sur le couvercle du module à sac gonflable pour déclencher le fonctionnement de l'organe fonctionnel.

En cas de déclenchement du fonctionnement du module à sac gonflable, la liaison entre le module à sac gonflable et l'armature est assurée par l'intermédiaire des moyens de fixation 12 correspondants qui permettent d'assurer une fixation résistante de ce module sur l'armature, comme on peut le voir sur la figure 2.

On conçoit alors que dans le volant de direction suivant l'invention, le module à sac gonflable et la coque d'habillage forment un sous-ensemble et sont fixés sur l'armature du volant par l'intermédiaire de moyens de fixation autorisant une course de déplacement déterminée de ce module et de cette coque par rapport à l'armature, tandis que des moyens élastiques sont associés à au moins certains de ces moyens de fixation pour solliciter ce sous-ensemble module-coque dans sa première position. Dans l'exemple de réalisation décrit, les moyens élastiques sont constitués par un ou plusieurs ressorts hélicoïdaux associés aux moyens de fixation de la coque d'habillage sur l'armature, mais il va de soi bien entendu qu'un autre mode de réalisation peut être envisagé et que ceux-ci peuvent également être associés aux moyens de fixation du module à sac gonflable sur cette armature.

Dans l'exemple de réalisation décrit, les moyens d'activation de l'organe fonctionnel comprennent une nappe sensible à la pression interposée entre la coque d'habillage et l'armature, cette nappe sensible étant adaptée pour détecter une action de l'utilisateur sur le couvercle du module à sac gonflable et le déplacement du sous-ensemble module-coque par rapport à cette armature du volant. Il va de soi bien entendu que d'autres modes de réalisation de ces moyens d'activation peuvent être envisagés.

On conçoit alors que le volant de direction selon l'invention présente un certain nombre d'avantages par rapport aux volants de direction de l'état de la technique, notamment au niveau de la simplicité de sa structure et de son esthétique dans la mesure où le couvercle du module à sac gonflable et la coque d'habillage forment un sous-ensemble déplaçable par rapport au reste du volant.

## Revendications

1. Volant de direction notamment de véhicule automobile, du type comportant un coussin central (2) muni de moyens d'activation (19) d'au moins un organe fonctionnel du véhicule et relié par l'intermédiaire d'au moins un bras de liaison (4, 5, 6) à une jante annulaire (3) et comprenant une armature de support (7) sur un côté de laquelle est prévu un module à sac gonflable (8) comportant un couvercle (9) et sur l'autre côté de laquelle est prévue une coque d'habillage (10), caractérisé en ce que le couvercle (9) du module à sac gonflable (8) et la coque d'habillage (10) se présentent sous la forme de deux demi-coquilles complémentaires présentant des zones d'accrochage (11) de l'une sur l'autre, pour former un sous-ensemble monté déplaçable, par appui de l'utilisateur sur le couvercle, à l'encontre de l'action des moyens élastiques (18), entre une première position et une seconde position de commande des moyens d'activation (19) de l'organe fonctionnel du véhicule.

2. Volant de direction selon la revendication 1, caractérisé en ce que les zones d'accrochage (11) du couvercle (9) et de la coque d'habillage (10) comprennent des parties en saillie et en creux complémentaires d'accrochage de ces pièces.

3. Volant de direction selon la revendication 1 ou 2, caractérisé en ce que le module à sac gonflable (8) et la coque d'habillage (10) sont fixés sur l'armature (7) par l'intermédiaire de moyens de fixation (12, 14) autorisant une course de déplacement déterminée du module et de la coque par rapport à cette armature et en ce que les moyens élastiques (18) sont associés à au moins certains de ces moyens de fixation pour solliciter ce sous-ensemble dans sa première position.

4. Volant de direction selon la revendication 3, caractérisé en ce que les moyens élastiques (18) sont associés aux moyens de fixation (14) de la coque d'habillage (10) sur l'armature (7).

5. Volant de direction selon l'une quelconque des revendications précédentes, caractérisé en ce que les moyens d'activation de l'organe fonctionnel du véhicule comprennent un organe sensible à la pression (19) interposé entre le sous-ensemble et l'armature (7).

6. Volant de direction selon la revendication 5, caractérisé en ce que l'organe sensible à la pression est interposé entre la coque d'habillage (10) et l'armature (7).

7. Volant de direction selon l'une quelconque des revendications 3 à 6, caractérisé en ce que les moyens de fixation (12) du module à sac gonflable sur l'armature comprennent chacun une vis (13) traversant un trou de l'armature et adaptée pour coopérer avec un écrou (8a) du module à sac gonflable.

8. Volant de direction selon l'une quelconque des revendications 3 à 7, caractérisé en ce que les moyens de fixation (14) de la coque d'habillage (10) sur l'armature (7) comprennent chacun une vis (15) traversant un trou de l'armature (7), et dont l'extrémité est adaptée pour être engagée dans un trou de fixation complémentaire (16) d'un plot d'accrochage (17) de la coque et en ce que les moyens élastiques (18) comprennent un ressort hélicoïdal interposé entre la tête de la vis (15) et l'armature (7) pour solliciter chaque plot en direction de cette armature.

9. Volant de direction selon les revendications 6 et 8, caractérisé en ce que l'organe sensible à la pression (19) est interposé entre un plot (17) de la coque et l'armature du volant.
